# EUROPÄISCHE PATENTSCHRIFT

(11) **EP 0 415 024 B1**
(45) Veröffentlichungstag und Bekanntmachung des Hinweises auf die Patenterteilung: **24.08.1994**
(21) Anmeldenummer: 90112323.2
(22) Anmeldetag: 28.06.1990
(51) Int. Cl.: B60K 41/06, B60K 41/10

(54) **Kraftfahrzeug mit einemm selbsttätig schaltenden Getriebe**
Vehicle with an automatic transmission
Véhicule avec une transmission automatique

(30) Priorität: 31.08.1989 DE 3928814
(43) Veröffentlichungstag der Anmeldung: 06.03.1991
(73) Patentinhaber: Dr.Ing.h.c. F. Porsche Aktiengesellschaft, 70435 Stuttgart (DE)
(72) Erfinder: Kaiser, Friedrich-Wilhelm, Dipl.-Ing., D-7251 Weissach (DE); Pelters, Stephan, Dipl.-Ing., D-7533 Tiefenbronn (DE); Seidel, Willi, Dipl.-Ing., D-7147 Eberdingen-Hochdorf (DE)

(56) Entgegenhaltungen:
- EP-A- 0 171 770
- DE-A- 1 954 783
- DE-A- 2 522 242
- US-A- 4 148 232
- US-A- 4 572 029
- US-A- 4 823 642

## Beschreibung

Die Erfindung betrifft ein Kraftfahrzeug mit einem selbsttätig schaltenden Getriebe nach der Gattung des Hauptanspruchs.

Aus Bosch "Technische Berichte", (7/1983)4; Seiten 160 bis 166 und ATZ 85 (1983)6, Seiten 401 bis 405, ist ein elektro-hydraulisch gesteuertes, selbsttätiges schaltendes Getriebe bekannt, das zwei nach unterschiedlichen Auslegungskriterien optimierte Schaltprogramme zur selbsttätigen Schaltung der Gangstufen des Getriebes aufweist. Mittels eines Schalters kann ein Fahrer des Kraftfahrzeugs entweder ein leistungsoptimiertes oder ein verbrauchsoptimiertes Schaltprogramm anwählen.

Ebenso geht aus der DE-C-33 41 652 und der nicht vorveröffentlichten DE-A-39 22 051.6 eine Getriebesteuerung hervor, bei der die Schaltprogramme selbsttätig mittels einer von Betriebs- oder Fahrparametern abhängigen Umschaltstrategie angewählt werden. Diese Getriebesteuerungen erzeugen beispielsweise durch Abtasten und Auswerten von Fahrpedal- bzw. Drosselklappen-Signalwerten eine Größe, welche ein Maß für einen Fahrstil oder eine Fahrweise des Fahrers des Kraftfahrzeugs ist. Aufgrund dieser Größe wählt die Getriebesteuerung aus mehreren, zwischen einem rein verbrauchsoptimierten und einem rein leistungsoptimierten Schaltprogramm liegenden und diese umfassenden Schaltprogrammen ein dem Fahrstil des Fahrers entsprechendes Schaltprogramm aus.

Wird ein Kraftfahrzeug mit einem derartigen, mit umschaltbaren Schaltprogrammen betriebenen, selbsttätig schaltenden Getriebe nach einem Kaltstart der Brennkraftmaschine längere Zeit mit dem verbrauchsoptimierten Schaltprogramm gefahren (was auch bei den beiden zuletzt genannten Getriebesteuerungen durch die angeratene behende Umgehensweise mit einer noch kalten Brennkraftmaschine häufig vorkommen kann), so hat es sich gezeigt, daß durch die verbrauchsoptimierte Betriebsweise des Kraftfahrzeugs ein der Brennkraftmaschine nachgeschaltetes Abgasreinigungssystem und auch die Brennkraftmaschine selbst über einen längeren Zeitraum hinweg ihre Betriebstemperatur nicht erreicht. Ein rasches Erreichen der Betriebstemperatur ist jedoch insbesondere bei Abgasreinigungssystemen zur Erlangung einer hohen Schadstoff-Konversionsrate äußerst wichtig.

In der gattungsbildenden EP-A-0 171 770 wird vorgeschlagen, daß für ein automatisches Getriebe zwei Schaltmuster vorzusehen sind, wobei das zweite Schaltmuster Zwischengänge überspringt, die im ersten Schaltmuster vorgesehen sind. Das erste, die Zwischengänge enthaltende Schaltmuster wird als leistungsorientiert und das zweite Schaltmuster als verbrauchsorientiert bezeichnet. Die Auswahl des Schaltmusters erfolgt entweder manuell oder automatisch. Abhängig von vorgegebenen Bedingungen, wobei eine der Bedingungen ist, daß die Motortemperatur einen vorgegebenen Wert erreicht hat, wird die Anwahl des zweiten Schaltmusters unterdrückt und das erste Schaltmuster verwendet.

Es ist daher Aufgabe der Erfindung, ein Kraftfahrzeug mit einem von einer Brennkraftmaschine angetriebenen, vorzugsweise elektro-hydraulisch gesteuerten, selbsttätig schaltenden Getriebe zu schaffen, bei dem die Brennkraftmaschine rasch erwärmt wird und ein dieser nachgeschaltetes Abgasreinigungssystem relativ schnell eine für ein gutes Funktionieren erforderliche Betriebstemperatur erreicht.

Diese Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Kraftfahrzeug mit einem von einer Brennkraftmaschine angetriebenen, vorzugsweise elektro-hydraulisch gesteuerten, selbsttätig schaffenden Getriebe geschaffen ist, bei dem die Brennkraftmaschine und ein dieser nachgeschaltetes Abgasreinigungssystem relativ rasch eine für ihr/sein gutes Funktionieren wichtige Betriebstemperatur ohne spürbar erhöhten Kraffstoffverbrauch erreicht.

Die Erfindung ist zudem einfach zu realisieren, da sie nur ein bei Kraftfahrzeugen in der Regel ohnehin erfaßtes Temperatursignal eines entsprechenden Temperatursensors benötigt und sich ansonsten auf eine geringfügige Erweiterung eines Steuerprogramms der Getriebesteuerung beschränkt.

Dies wird insbesondere dadurch erreicht, daß bei Vorliegen der mittels des Temperatursensors erfaßten Kaltstartbedingung eine Getriebesteuerung für die Dauer der Kaltstartbedingung, jedoch höchstens für einen begrenzten Zeitraum, die Gangstufen über ein weiteres, vorbestimmtes Schaltprogramm derart schaltet, daß die Brennkraftmaschine unter gleichen Fahrbedingungen höhere Abgasmasseströme oder Abgasenergieströme erzeugt als bei den über ein verbrauchsoptimiertes Schaltprogramm geschalteten Gangstufen.

Die Erfindung wird nachstehend anhand der in den Zeichnungen dargestellten Ausführungsformen näher erläutert.
Es zeigt
- Fig. 1: ein Blockschaltbild einer elektro-hydraulischen Steuerung eines selbsttätig schaltenden Getriebes eines Kraftfahrzeugs,
- Fig. 2: ein Flußdiagramm zur Erweiterung einer Getriebesteuerung,
- Fig. 3: ein verbrauchsoptimiertes Schaltprogramm,
- Fig. 4: ein Warmlauf-Schaltprogramm.

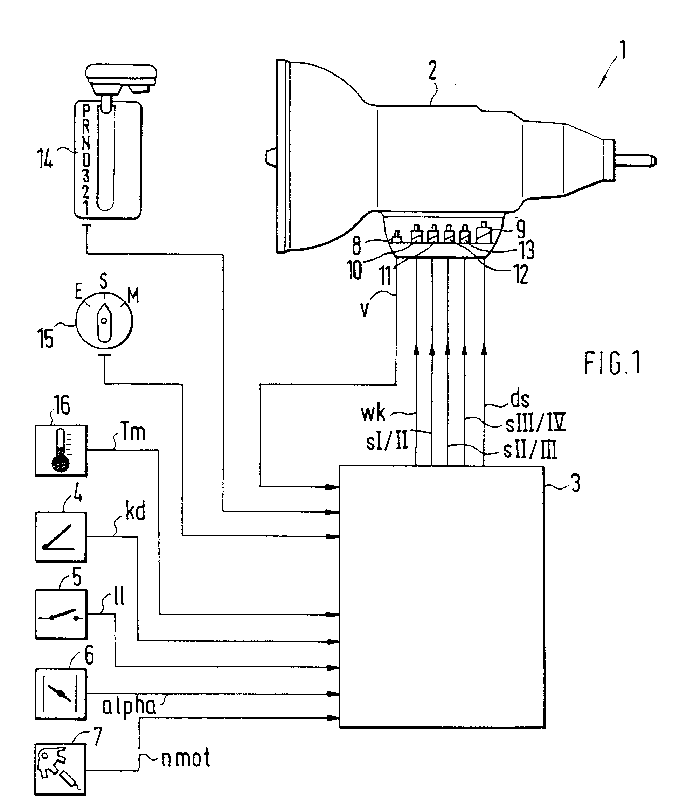

In Fig. 1 ist mit 1 eine elektro-hydraulische Steuerung eines selbsttätig schaltenden Getriebes 2 eines mit einer Brennkraftmaschine angetriebenen Kraftfahrzeugs (nicht gezeigt) dargestellt, wie es beispielsweise in Bosch "Technische Berichte", 7(1983)4 auf den Seiten 160 bis 166 und in der ATZ 85 (1983)6 auf den Seiten 401 bis 405 beschrieben ist.

Ein Steuergerät 3 steuert in Abhängigkeit von einem Kick-Down-Signal kd eines Kick-Down-Gebers 4 am Fahrpedal des Kraftffahrzeugs sowie einem Leerlaufsignal ll eines Drosselklappenschalters 5, eines Drosselklappenwinkelsignals alpha eines Drosselklappenwinkelgebers 6 und eines Motordrehzahlsignals nmot eines Motordrehzahlgebers 7 einer nicht gezeigten Brennkraftmaschine und eines Fahrgeschwindigkeitsignals v eines Getriebeausgangsdrehzahl-Signalgebers 8
- einen Druckregler 9 für ein Hydraulikfluid (Signalausgang ds)
- ein erstes Magnetventil 10 zur Steuerung eines Wandlers bzw. einer Wandlerüberbrückungskupplung (Signalausgang wk),
- ein zweites Elektromagnetventil 11 zur Steuerung des Gangstufenwechsels zwischen den Gangstufen I und II (Signalausgang sI/II),
- ein drittes Elektromagnetventil 12 zur Steuerung des Gangstufenwechsels zwischen den Gangstufen II und III (Signalausgang sII/III) und
- ein viertes Elektromagnetventil 13 zur Steuerung des Gangstufenwechsels zwischen den Gangstufen III und IV (Signalausgang sIII/IV).

Die Steuerung ist hierbei vom Fahrzeugführer über einen Wählhebel 14 zur Vorwahl der Fahrstufen P, R, N, D, 3, 2, 1 und einen Programmwählschalter 15 zum Anwählen von Schaltprogrammen E, S, N, beeinflußbar. In den Schaltprogrammen E (SKFe) bzw. S (SKFs), in denen die Schaltvorgänge in einer vollautomatischen Betriebsweise nach verbrauchsoptimierten bzw. leistungsoptimierten Kriterien gesteuert werden, sind die Fahrstufen P (Parken), R (Rückwärtsgangstufe), N (Leergangstufe), D (alle vier Gangstufen IV, III, II, I), 3 (Begrenzung auf die drei untersten Gangstufen III, II, I) und II (Begrenzung auf die Gangstufen II und I) und I (Begrenzung auf die 1. Gangstufe I) anwählbar. Auf ein Schaltprogramm M zur halbautomatischen Betriebsweise soll hier jedoch nicht weiter eingegangen werden.

Die Getriebesteuerung wird nun um einen Temperatursensor 16 erweitert, der der Erfassung der Kaltstartbedingung des Kraftfahrzeugs dient. Hierzu kann beispielsweise die Kühlmitteltemperatur Tm der Brennkraftmaschine erfaßt und ein entsprechendes Signal an das Steuergerät 3 abgegeben werden. Alternativ hierzu ist es selbstverständlich auch möglich, eine Temperatur Tg eines Kühlmittels und/oder Schmierstoffes des Getriebes zu erfassen oder direkt eine Temperatur Ta eines Abgasreinigungssystems (Katalysators) oder eines dieses durchströmenden Gasstroms.

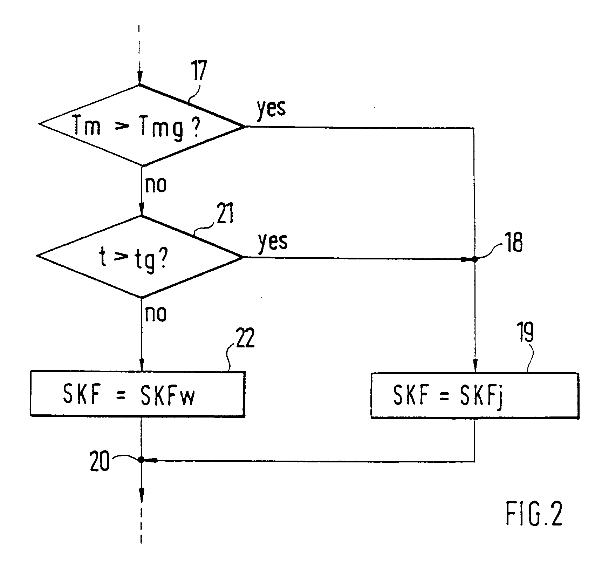

Ein Steuerprogramm oder -verfahren des Steuergeräts 3 wird nun entsprechend Fig. 2 erweitert. Die Erweiterung kann beispielsweise an einer Programmstelle eingebaut werden, an der normalerweise der Programmwählschalter 15 abgetastet wird oder die Umschaltstrategie zum selbsttätigen Umschalten der Schaltprogramme entsprechend der DE-C-33 41 652 oder der DE-A-39 22 051.6 erfolgt.

Es wird abgefragt, ob die Kühlmitteltemperatur Tm der Brennkraftmaschine größer als ein Motortemperatur-Grenzwert Tmg ist (alternativ hierzu kann auch geprüft werden, ob eine Kühl- oder Schmiermitteltemperatur Tg des Getriebes größer als ein Getriebetemperatur-Grenzwert Tgg oder eine Temperatur Ta des Abgasreinigungssystems oder eines dieses durchströmenden Gasstroms größer als ein Abgasreinigungstemperatur-Grenzwert Tag ist), 17.

Ist dies der Fall, so wird nach Durchlaufen eines Programmpunkts 18 das Schaltprogramm entsprechend der Schalterstellung des Programmwählschalters 15 oder entsprechend der selbsttätigen Umschaltstrategie festgelegt, 19. Anschließend wird über den Verzweigungspunkt 20 ins reguläre Getriebesteuerungsprogramm zurückgekehrt.

Ist die Abfrage 17 negativ, so wird geprüft, ob ein nach Starten der Brennkraftmaschine beginnender Zeitraum t bereits größer als ein begrenzter Zeitraum tg ist, was in an sich bekannter Weise mittels einer Zeitzählschleife erfolgen kann. Ist die Bedingung 21 erfüllt, so wird wiederum mit Programmpunkt 18 fortgefahren, ist sie dagegen nicht erfüllt, so wird ein sogenanntes Warmlaufschaltprogramm SKFw festgelegt bzw. adressiert, 22 und das Programm am Verzweigungspunkt 20 fortgesetzt.

Aufgrund dieses Warmlauf-Schaltprogramms SKFw werden die Gangstufen g des Getriebes so geschaltet, daß die Brennkraftmaschine unter gleichen Fahrbedingungen höhere Abgasmassen- oder -energieströme erzeugt als bei den über ein verbrauchsoptimiertes Schaltprogramm geschalteten Gangstufen g. Die manuelle oder selbsttätige Anwahl der Schaltprogramme SKFj wird somit unterdrückt, solange die Kaltstartbedingung vorliegt (negative Abfrage 17) oder der Zeitraum tg noch nicht überschritten ist (negative Abfrage 21).

Alternativ hierzu kann es vorgesehen sein, daß bei der selbsttätigen Anwahl der Schaltprogramme neben dem Warmlaufschaltprogramm SKFw weitere Schaltprogramme zugelassen werden, bei denen die Brennkraftmaschine unter gleichen Fahrbedingungen noch höhere Abgasmassen- oder energieströme erzeugt als bei den über das Warmlaufschaltprogramm SKFw geschalteten Gangstufen g.

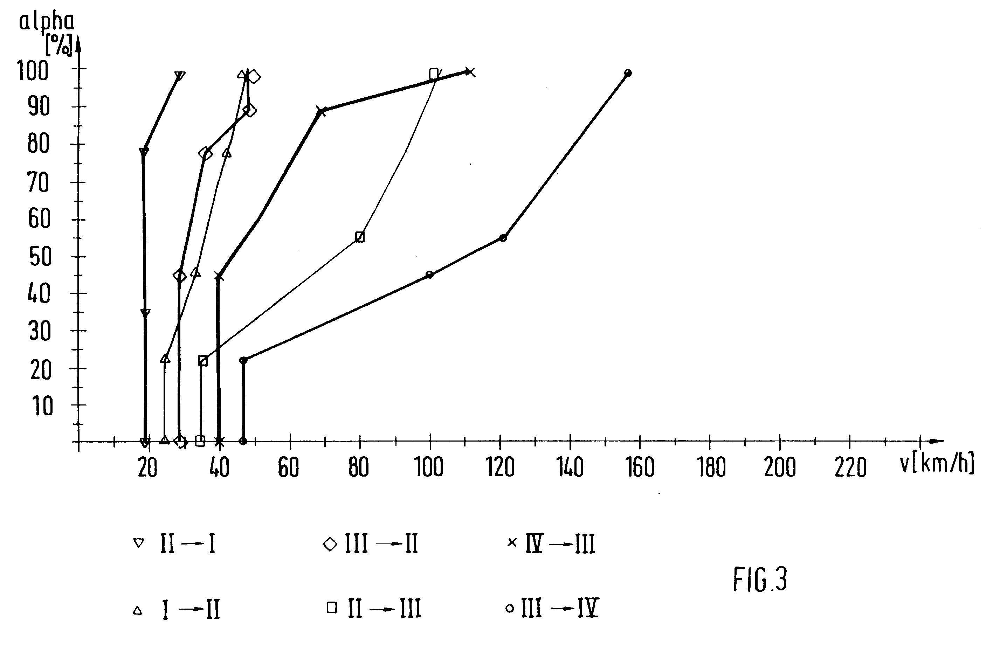

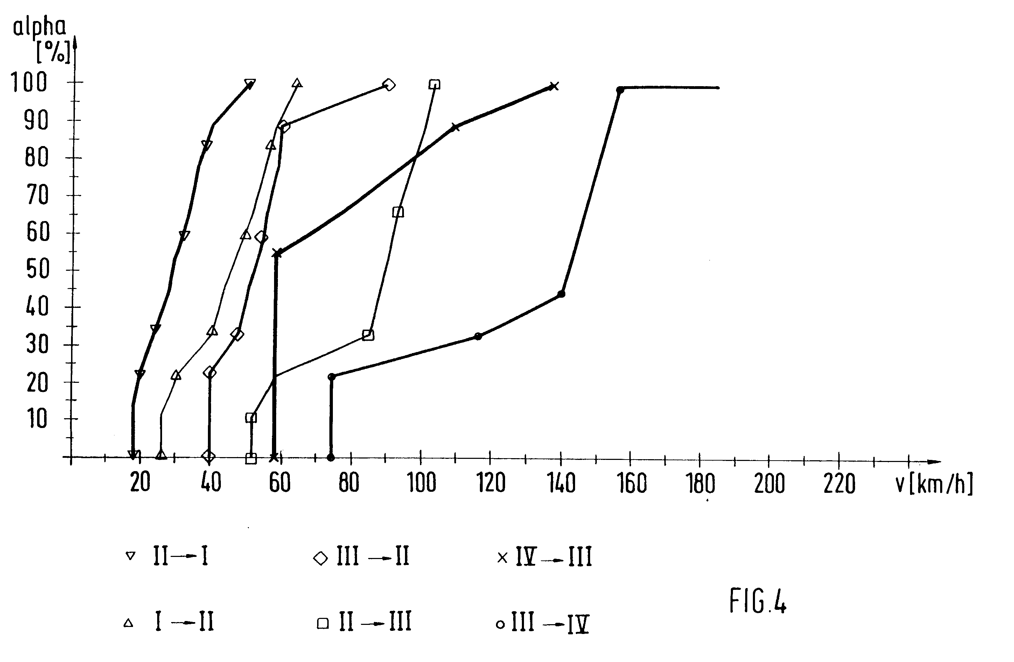

In den nachfolgenden Fig. 3 und 4 sind zwei Schaltprogramme dargestellt, nach denen die Gangstufen entsprechend der Fahrgeschwindigkeit v und der Drosselklappenstellung alpha gewechselt werden, sofern ein Betriebspunkt des Kraftfahrzeugs die entsprechenden Schaltlinien über- bzw. unterschreitet.

Während in Fig. 3 ein verbrauchsoptimiertes Schaltprogramm SKFe gezeigt ist, ist in Fig. 4 ein Warmlaufschaltprogramm SKFw dargestellt.

Im direkten Vergleich erkennt man beispielsweise anhand der Hochschaltkennlinie von g = III nach g = IV, daß die Hochschaltung bei einem Drosselöffnungsgrad von 45 % nicht bereits bei 100 km/h, sondern erst bei 140 km/h erfolgt, so daß die Brennkraftmaschine wesentlich höhere Drehzahlen erreicht und damit von wesentlich größeren Gemischmassenströmen durchsetzt wird.

Hierdurch wird die Brennkraftmaschine schneller erwärmt und das Abgasreinigungssystem erreicht aufgrund des höheren Temperatur- bzw. Energieniveaus im Abgas rascher seine Betriebstemperatur. Der Zeitraum tg kann hierbei im Bereich einiger Sekunden bis einiger Minuten liegen. Dies führt zwar unter Umständen zu einem momentan geringfügig erhöhten Verbrauch, der jedoch lediglich während des Zeitraum tg auftritt und durch die schnellere Erwärmung der Brennkraftmaschine wieder ausgeglichen werden kann.

## Patentansprüche

1. Kraftfahrzeug mit einem von einer Brennkraftmaschine angetriebenen vorzugsweise elektro-hydraulisch gesteuerten, selbsttätig schaffenden Getriebe (2), wobei die Brennkraftmaschine mittels eines Leistungssteuerorgans, vorzugsweise eines Fahrpedals oder einer Drosselklappe (6), beeinflußbar ist und Gangstufen (g) des Getriebes (2) über wenigstens je ein verbrauchsoptimiertes und ein leistungsoptimiertes Schaltprogramm (SKFj) (verbrauchsoptimiertes Schaltprogramm (SKFe), leistungsoptimiertes Schaffprogramm (SKFs)) wenigstens abhängig von der Stellung (alpha) der Drosselklappe (6) und von der Motordrehzahl (nmot) automatisch geschaltet werden, die Schaffprogramme (SKFj) manuell durch den Fahrer oder selbsttätig mittels einer von Betriebs- oder Fahrparametem abhängigen Umschaltstrategie angewählt werden können, mittels eines Temperatursensors (16) eine Kaltstartbedingung des Kraftfahrzeugs erfaßt wird und eine Getriebesteuerung (1) für die Dauer der Kaltstartbedingung die Anwahl eines verbrauchsoptimierten Schaltprogrammes (SKFe) unterdrückt, dadurch gekennzeichnet, daß die Getriebesteuerung (1) bei vorliegen der Kaltstartbedingung ein weiteres, vorbestimmtes Schaltprogramm (Warmlauf-Schaffprogramm (SKFw)) anwählt, das die Gangstufen (g) derart schaffet, daß die Brennkraftmaschine unter gleichen Fahrbedingungen höhere Abgasmassenströme oder Abgasenergieströme erzeugt als bei den über das verbrauchsoptimierte Schaltprogramm (SKFe) geschalteten Gangstufen (g)und daß das weitere, vorbestimmte Schaffprogramm (Warmlauf- Schaffprogramm (SKFw)) höchstens für einen begrenzten Zeitraum (tg) gewährt wird.

2. Kraftfahrzeug nach Anspruch 1, **dadurch gekennzeichnet**, daß die manuelle oder selbsttätige Anwahl der Schaltprogramme (SKFj) unterdrückt wird, solange die Kaltstartbedingung vorliegt oder der Zeitraum (tg) noch nicht überschritten ist.

3. Kraftfahrzeug nach Anspruch 2, **dadurch gekennzeichnet**, daß lediglich bei der selbsttätigen Anwahl der Schaltprogramme (SKFj) neben dem Warmlauf-Schaltprogramm (SKFw) weitere Schaltprogramme zugelassen werden, bei denen die Brennkraftmaschine unter gleichen Fahrbedingungen noch höhere Abgasmassen- oder -energieströme erzeugt als bei den über das WarmlaufSchaltprogramm (SKFw) geschalteten Gangstufen (g).

4. Kraftfahrzeug nach wenigstens einem der vorangehenden Ansprüche, **dadurch gekennzeichnet**, daß die Erfassung der Kaltstartbedingung durch Messen einer Kühlmitteltemperatur (Tm) der Brennkraftmaschine und Vergleich (17) der Kühlmitteltemperatur (Tm) mit einem Motortemperatur- Grenzwert (Tmg) erfolgt.

5. Kraftfahrzeug nach wenigstens einem der vorangehenden Ansprüche 1 bis 3, **dadurch gekennzeichnet**, daß die Erfassung der Kaltstartbedingung durch Messen einer Kühlmitteltemperatur (Tg) des Getriebes und Vergleich der Kühlmitteltemperatur (Tg) mit einem Getriebetemperatur- Grenzwert (Tgg) erfolgt.

6. Kraftfahrzeug nach wenigstens einem der vorangehenden Ansprüche 1 bis 3, **dadurch gekennzeichnet**, daß die Erfassung der Kaltstartbedingung durch Messen einer Temperatur (Ta) eines Abgasreinigungssystems (Katalysators) oder eines dieses durchströmenden Gasstroms und Vergleich der Temperatur (Ta) mit einem Abgasreinigungstemperatur- Grenzwert (Tag) erfolgt.

## Claims

1. Motor vehicle having a preferably electrohydraulically controlled, automatically switching gearbox (2) driven by an internal combustion engine, the internal combustion engine being influenceable by means of a power control member, preferably an accelerator pedal or a throttle valve (6), and gear stages (g) of the gearbox (2) being automatically switched by way of at least one consumption-optimized and at least one power-optimized switching program (SKFj) (consumption-optimized switching program (SKFe), power-optimized switching program (SKFs)) at least in dependence on the position (alpha) of the throttle valve (6) and on the engine speed (nmot), it being possible to select the switching programs (SKFj) manually by the driver or automatically by means of a switching strategy dependent on operating or driving parameters, a cold start condition of the motor vehicle being detected by means of a temperature sensor (16) and a gearbox control (1) preventing the selection of a consumption-optimized switching program (SKFe) for the duration of the cold start condition, characterized in that if the cold start condition applies the gearbox control (1) selects a further, predetermined switching program (warm-up switching program (SKFw)) which switches the gear stages (g) such that, subject to identical driving conditions, the internal combustion engine generates greater exhaust gas mass flows or exhaust gas energy flows than in the case of the gear stages (g) switched by way of the consumption-optimized switching program (SKFe), and in that the further, predetermined switching program (warm-up switching program (SKFw)) is selected at most for a limited period of time (tg).

2. Motor vehicle according to Claim 1, characterized in that the manual or automatic selection of the switching programs (SKFj) is prevented as long as the cold start condition applies or the period of time (tg) has not yet elapsed.

3. Motor vehicle according to Claim 2, characterized in that only in the case of the automatic selection of the switching programs (SKFj) are there admitted, in addition to the warm-up switching program (SKFw), further switching programs in which the internal combustion engine, subject to identical driving conditions, generates even greater exhaust gas mass or energy flows than in the case of the gear stages (g) switched by way of the warm-up switching program (SKFw).

4. Motor vehicle according to at least one of the preceding claims, characterized in that the detection of the cold start condition is effected by measuring a coolant temperature (Tm) of the internal combustion engine and comparing (17) the coolant temperature (Tm) with an engine temperature limit value (Tmg).

5. Motor vehicle according to at least one of the preceding Claims 1 to 3, characterized in that the detection of the cold start condition is effected by measuring a coolant temperature (Tg) of the gearbox and comparing the coolant temperature (Tg) with a gearbox temperature limit value (Tgg).

6. Motor vehicle according to at least one of the preceding Claims 1 to 3, characterized in that the detection of the cold start condition is effected by measuring a temperature (Ta) of an exhaust gas cleaning system (catalytic converter) or a gas flow flowing through the latter and comparing the temperature (Ta) with an exhaust gas cleaning temperature limit value (Tag).

## Revendications

1. Véhicule automobile avec une boîte de vitesses (2) automatique entraînée par un moteur à combustion interne, commandé de préférence électrohydrauliquement le moteur à combustion interne pouvant être influencé au moyen d'un organe de commande de puissance, de préférence une pédale d'accélérateur ou un papillon des gaz (6) et des rapports (g) de la boîte de vitesses (2) étant automatiquement enclenchés par au moins chacun un programme de manoeuvre (SKFj) optimisé quant à la consommation et à la puissance (programme de manoeuvre optimisé quant à la consommation (SKFe), programme de manoeuvre optimisé quant à l a puissance (SKFs)) au moins en fonction de la position (α) du papillon des gaz (6) et de la vitesse de rotation du moteur (nmot) les programmes de manoeuvre (SKFj) pouvant être sélectionnés manuellement par le conducteur ou automatique ment au moyen d'une stratégie de commutation dépendant de paramètres de fonctionnement ou de conduite, une condition de démarrage à froid du véhicule étant enregistrée au moyen d'un capteur de température (16) et une commande de boîte de vitesses (1) empêchant pendant la durée de la condition de démarrage à froid la sélection d'un programme de manoeuvre (SKFe) optimisé quant à la consommation caractérisé en ce que la commande de boîte de vitesses (1) sélectionne, en présence de la condition de démarrage à froid, un autre programme de manoeuvre prédéterminé (programme de manoeuvre de conduite à chaud (SKFw)), qui enclenche les rapports (g) de manière que le moteur à combustion interne produise pour les mêmes conditions de conduite, des débits massiques de gaz d'échappement ou des flux énergétiques de gaz d'échappement plus importants que pour les rapports (g) enclenchés par le programme de manoeuvre optimisé quant à la consommation (SKFe) et en ce que l'autre programme de manoeuvre prédéterminé (programme de manoeuvre de marche à chaud (SKFw)) est sélectionné au plus pour une durée (tg) limitée.

2. Véhicule automobile selon la revendication 1, caractérisé en ce que la sélection manuelle ou automatique des programmes de manoeuvre (SKFj) est interdite tant que la condition de démarrage à froid existe ou si la durée (tg) n'est pas encore écoulée.

3. Véhicule automobile selon la revendication 2, caractérisé en ce que dans le cas de la sélection automatique des programmes de manoeuvre (SKFj) seulement, outre le programme de manoeuvre de marche à chaud (SKFw), d'autres programmes de manoeuvre sont autorisés pour lesquels le moteur à combustion interne dans les mêmes conditions de conduite produit des flux massiques ou énergétiques de gaz d'échappement encore plus importants que pour les rapports (g) enclenchés par le programme de manoeuvre de marche à chaud (SKFw).

4. Véhicule automobile selon l'une au moins des revendications précédentes, caractérisé en ce que la détection de la condition de démarrage à froid s'effectue par mesure d'une température de réfrigérant (Tm) du moteur à combustion interne et comparaison (17) de la température de réfrigérant (Tm) avec une valeur limite de température du moteur (Tmg).

5. Véhicule automobile selon l'une au moins des revendications 1 à 3 précédentes, caractérisé en ce que la détection de la condition de démarrage à froid s'effectue par mesure d'une température de réfrigérant (Tg) de la boîte de vitesses et comparaison de la température de réfrigérant (Tg) avec une valeur limite de température de boîte de vitesses (Tgg).

6. Véhicule automobile sel on l'une au moins des revendications 1 à 3 précédentes, caractérisé en ce que la détection de la condition de démarrage à froid s' effectue par mesure d' une température (Ta) d'un système d'épuration des gaz d'échappement (catalyseur) ou d'un courant de gaz traversant celui-ci et comparaison de la température (Ta) avec une valeur limite de température d'épuration des gaz d'échappement (Tag).
